**Europäisches Patentamt**

**European Patent Office**

**Office européen des brevets**

(11) Veröffentlichungsnummer : **0 046 938**
**B1**

# (12) EUROPÄISCHE PATENTSCHRIFT

(45) Veröffentlichungstag der Patentschrift :
**07.11.84**

(21) Anmeldenummer : **81106489.8**

(22) Anmeldetag : **20.08.81**

(51) Int. Cl.³ : **H 04 L   7/04**

(54) **Schaltung zur Synchronisation einer Sende- Empfangsstelle auf das Datennetz eines digitalen Nachrichtensystems.**

(30) Priorität : **27.08.80 DE 3032296**

(43) Veröffentlichungstag der Anmeldung :
**10.03.82 Patentblatt 82/10**

(45) Bekanntmachung des Hinweises auf die Patenterteilung : **07.11.84 Patentblatt 84/45**

(84) Benannte Vertragsstaaten :
**AT BE CH FR GB IT LI LU NL SE**

(56) Entgegenhaltungen :
**DE-A- 2 221 145**
**DE-B- 3 032 296**
**GB-A- 1 288 661**
**US-A- 3 760 355**
**US-A- 3 766 316**

(73) Patentinhaber : **Siemens Aktiengesellschaft**
**Berlin und München Wittelsbacherplatz 2**
**D-8000 München 2 (DE)**

(72) Erfinder : **Pooch, Gerhard, Ing. grad.**
**Nordendstrasse 119**
**D-8080 Emmering (DE)**
Erfinder : **von der Neyen, Hans-Jürgen, Ing. grad.**
**Damaschkestrasse 63**
**D-8000 München 82 (DE)** .

Jouve, 18, rue St-Denis, 75001 Paris, France

**Beschreibung**

Die Erfindung bezieht sich auf eine Schaltung zur Synchronisation einer Sende-Empfangsstelle auf das Datennetz eines digitalen Nachrichtensystems mit einem Korrelationsempfänger in der jeweiligen Empfangseinrichtung.

Eine Empfangseinrichtung dieser Art ist durch die GB-A-1 288 661 bekannt. Diese bezieht sich auf ein Nachrichtenübertragungssystem, in welchem der Empfänger mit dem Sender synchronisiert werden soll, damit die in modulierter, verwürfelter oder anderweitig codierter Form übertragene Information im Empfänger genau demoduliert und die Originalinformation mit einem Minimum an Fehlern erhalten wird.

Digitale Nachrichtensysteme übertragen Datenströme zwischen Sende- und Empfangsstelle. In einem Datennetz sind eine ganze Reihe von Empfangsstellen mit einer Sendestelle verbunden. Die Verbindung kann über eine Festdrahtleitung oder auf dem Funkwege zustande kommen. Sollten weitere Empfangsstellen zugeschaltet werden, so müssen sie, bevor sie sich aktiv am Datenaustausch beteiligen können, aus einem asynchronen Zustand auf das Datennetz synchronisiert werden.

Je nach Art des Datentransfers sind für den Synchronisationsvorgang verschiedene Arten der Synchronisation notwendig. So ist für die Fehlerfreie Erkennung und Verarbeitung der Empfangsdaten der auf das Eingangssignal nachgeführte Empfangstakt erforderlich. Das Empfangssignal erleidet abhängig von der Charakteristik der Übertragungsstrecke neben Pegelabschwächungen noch Laufzeitverzerrungen oder Interferenzstörungen durch Mehrwegeausbreitung. Die dabei erforderliche Bitsynchronisation wird dann erreicht, wenn die Abfrageflanke des Empfangstaktes im Zeitpunkt nahezu größter Lesesicherheit auf dem analogen Empfangssignal zu liegen kommt.

Erfolgt die Datenübertragung blockstrukturiert, so wird beim Einsynchronisieren der Sende-Empfangsstelle neben der Bitsynchronisation zusätzlich noch die Blocksynchronisation erforderlich.

Für die Ermittlung des Block- und Phasenbezugs werden an definierten Blockstellen spezielle Codeworte (Barkercode) übertragen, die auf der Empfangsseite durch Autokorrelation ausgewertet werden.

In Synchronnetzen herrscht zwischen allen Sende/Empfangsstellen annähernd, d. h. bis auf die Funklaufzeitunterschiede innerhalb eines Funkbereiches, fester Blockbezug. Bitsynchronismus ist für die direkt miteinander am Datenaustausch beteiligten Stationen erforderlich. Darüber hinaus können die Stationen im Vielfachzugriff arbeiten, wobei der blockweise Datenaustausch immer an feste Zeitplätze gebunden ist. Jeder Sendedatenblock enthält somit ein ausreichend langes Codewort (Barkercode), das in der Empfangseinrichtung über Korrelation die notwendigen Block- und Phasenkorrekturen liefert.

Für ein mobiles Funknetz, wie es in einer früheren Patentanmeldung der Anmelderin beschrieben wurde, soll ein solcher Korrelationsempfänger mit erweitertem Aufgabenbereich eingesetzt werden. Bei diesem mobilen Funknetz handelt es sich um ein Synchronnetz, in dem der Daten- und Sprechverkehr zwischen den mobilen Funkteilnehmer-Stationen und den stationären Fest-Stationen bei fester Funkbereichszuordnung abgewickelt wird. Bevor ein Gesprächsaufbau zustande kommt, ist ein organisatorischer Datenaustausch zwischen Mobilteilnehmer und Feststation notwendig, wie z. B. Anmeldung, Umbuchung oder Wahlnummernübertragung. Für die Abwicklung ist ein eigener Funkkanal (Organisationskanal) vorgesehen, in dem mehrere Feststationen in Vielfachzugriff, also mit fester Zeitplatzzuordnung, arbeiten können. Über diese Zuordnung hat der Mobilteilnehmer die Möglichkeit, über die Empfangsqualitätskontrolle mit dem für ihn am günstigsten Funkbereich eine organisatorische Datenverbindung aufzunehmen. Nach diesem Aufbau werden aber weiterhin in allen Zeitschlitzen (Funkbereichen) die Empfangsqualität und die Einstellkriterien erfaßt, um bei Veränderung der Funkfeldparameter, bedingt durch Ortsveränderung des Mobilteilnehmers, sofort den nun optimalen Funkbereich zu erkennen und die erforderlichen Stellinformationen parat zu haben. Werden die Systemeigenschaften in dieser Weise erfüllt, so kann problemlos ein Umbuchvorgang erfolgen. Die Aufgabe des Korrelationsempfängers besteht einmal darin, aus einem asynchronen Zustand heraus die Bit- und Blocksynchronisation für den günstigen Funkbereich durchzuführen (direkter Zugriff auf die Stellglieder), zum anderen im Synchronbetrieb die Stellkriterien für den aktuellen Funkbereich und für den Fall der Umbuchung die aller anderen möglichen Funkbereiche zu liefern (indirekter Zugriff auf die Stellglieder über den Rechner).

Der Erfindung liegt die Aufgabe zugrunde, für eine solche Synchronisation einer Sende/Empfangsstelle auf das Datennetz eines digitalen Nachrichtensystems eine digitale Schaltung für die Bitphasenfindung zu schaffen.

Diese Aufgabe wird gemäß der Erfindung in der Weise gelöst, daß dem Korrelationsempfänger eine Einrichtung zur Phasenfindung nachgeschaltet ist mit einem Auf/Abwärtszähler mit definiertem Anfangszählerstand und definierter Stellrichtung, bei dem das Korrelationssignal entsprechend seiner Zeichenwechselflanke die Zählrichtung steuert und den Takt über einen Umschalter auf seinen Takteingang (Zähleingang) schaltet, derart, daß die eine Zählrichtung mit einem langsamen Takt geschaltet wird und der Zählerstand des Auf/Abwärtszählers bei Zählrichtungswechsel jeweils so lange festgehalten wird, bis das über ein Verzögerungsglied verzögerte, den Zählrichtungswechsel bewirkende Korrelationssignal über den Umschalter einen Takt doppelter Taktfolge auf den Takteingang des Auf/Abwärtszählers schaltet, dessen Ausgangssignal (decodierter Anfangszählerstand) und das verzögerte Korrelationssignal den Eingängen einer Verknüpfungsschaltung zugeführt werden, und daß ein weiterer, mit dem starren langsamen Takt arbeitender Aufwärtszähler vorgesehen ist, dessen Zählerstand in einen nachgeschalteten an den Rechner angeschlossenen Zwischenspeicher bei Erreichen des decodierten Ausgangszählerstandes des Auf/Abwärtszählers übernommen wird.

Nachstehend wird die Erfindung anhand von in der Zeichnung dargestellten Ausführungsbeispielen näher erläutert.

Es zeigen

Figur 1 einen Korrelationsempfänger im Blockschaltbild,

Figur 2 einen Korrelationsempfänger mit nachgeschalteter Einrichtung zur Phasenfindung im Blockschaltbild,

Figur 3 ein Zeitdiagramm für die Phasenfindung, und

Figur 4 den Empfangsteil einer Sende/Empfangsstelle mit Korrelationsempfänger und Synchronisationseinrichtungen.

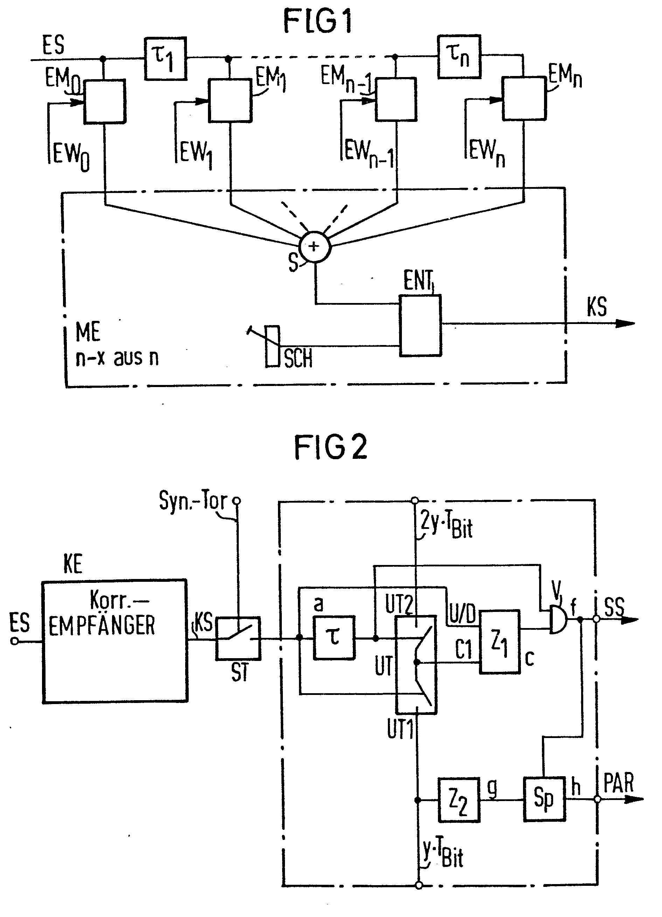

Bei dem in Fig. 1 dargestellten Korrelationsempfänger wird das Eingangsdatensignal ES einer Laufzeitkette zugeführt, deren Laufzeitglieder eine Laufzeit von $\tau 1$ ... $\tau n$ aufweisen. Die Verzögerungszeit je Laufzeitglied entspricht genau einer Datenzeichendauer. Die Anzahl der parallelen Ausgänge, in denen einstellbare Multiplizierer $EM_0$ ... $EM_n$ (n = Wortlänge des Barkercodes) eingeschaltet sind, entspricht der Zeichenanzahl des Barkercodes. Die einstellbaren Multiplizierer EM werden dabei von dem erwarteten Code $EW_0$ ... $EW_n$ so eingestellt, daß bei parallelem Anliegen des Barkercodewortes am Ausgang eines die die Multiplizierer EM enthaltenden Zweige zusammenführenden Summationspunktes S ein Maximum auftritt. Dieses Maximum bleibt für die Dauer des letzten Barkercodezeichens bestehen. Der in der Figur strichliert umrandete Majoritätsentscheider ME liefert am Ausgang das Korrelationssignal KS, falls der maximal zulässige Erkennungsfehler x nicht überschritten wurde. x ist also die Anzahl von Zeichen, ohne deren Bewertung bei Korrelation trotzdem noch ein Ausgangssignal detektiert werden kann. Dieser Wert kann über die Vergleichsschwelle SCH des Entscheiders ENT, dessen zweiter Eingang mit dem Summationspunkt S verbunden ist, eingestellt werden. Mit Erscheinen des Korrelationssignals werden alle auf dem Block- und Phasenbezug zeitkritischen Takte und Signale synchronisiert. Das Korrelationsempfänger-Ausgangssignal wird vor seiner Ausgabe so umgesetzt, daß es die optimale Lesephase markiert.

Dieses Signal wird für die Übertragung zum Rechner zusätzlich codiert.

Fig. 2 zeigt im Blockschaltbild eine Schaltung zur Phasenfindung, die aus dem bereits digitalisierten Korrelationssignal KS die Phasenkodierung vornimmt. Dies kann grundsätzlich in zwei Moden vorgenommen werden, nämlich durch eine unmittelbare Phasenangabe (direkte Einstellung) mit dem Synchronisationssignal SS am Ausgang oder über eine über mehrere Ergebnisse gemittelte Einstellung unter Verwendung eines Rechners als Phasenadresse PAR.

Das Korrelationssignal KS wird über eine Zeitbewertung auf die strichliert umrandete Schaltung zur Phasenfindung gegeben. Die Phasenfindung ist weitestgehend unabhängig von der Zeichendauerverschiebung der beiden Logikzustände des Empfangsdatenstromes ES (Stromflußwinkeländerung). Eine Zeitbewertung des Synchronisations-Zeichens erfolgt durch ein Synchronisations-Tor (Syn-Tor). Dieser Zeitbewerter besteht aus einem Schalter ST, der nur jeweils im Erwartungszeitraum eines Korrelationssignals geschlossen wird. Mit der Festlegung des Erwartungszeitraumes für das Korrelationssignal KS über diesen Schalter ST kann das Wirksamwerden von simulierten Signalen nahezu unterbunden werden. Am Ausgang des Schalters ST wird das Korrelationssignal KS wie in der vorstehend beschriebenen Fig. 1 ausgegeben.

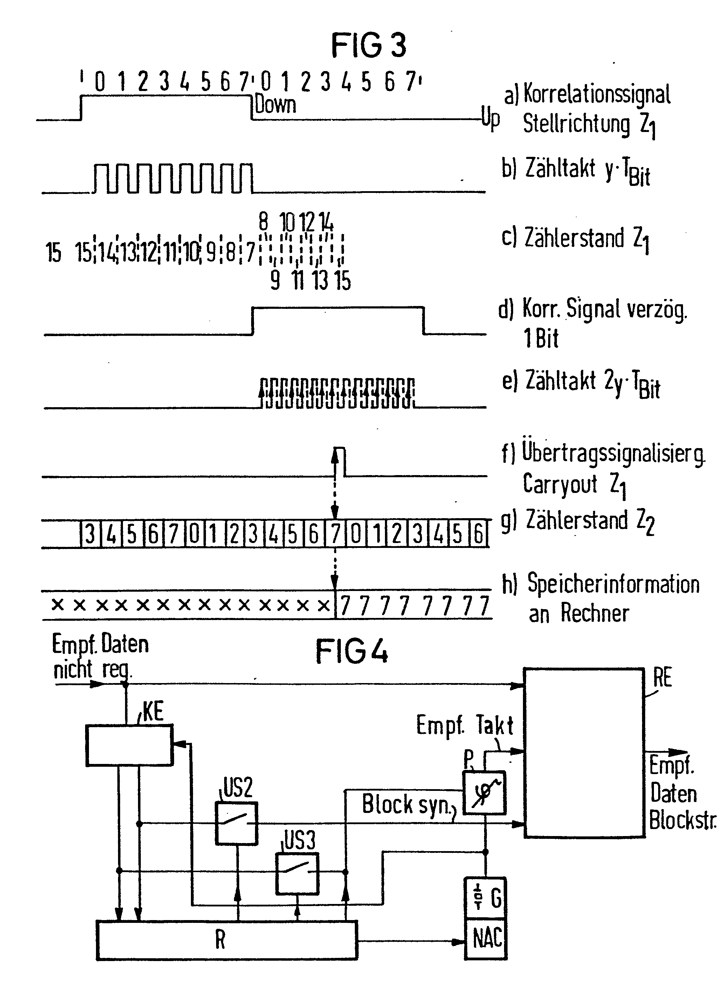

Die Ermittlung der optimalen Lesephase erfolgt in der als Schaltung zur Phasenfindung bezeichneten Auswerteschaltung. Diese Auswerteschaltung, die bereits im Abfragezeitpunkt des dem Barkercodewort folgenden nächsten Nutzbits die richtige Stellinformation für die Empfangstaktkorrektur liefert, wird nachfolgend beschrieben. Zusätzlich wird die Funktion der Phasenfindung anhand des Zeitdiagramms nach Fig. 3 erläutert.

Die Schaltung nach Figur 2 für die Phasenfindung des Empfangstaktes, auf den das Korrelationssignal KS des Korrelationsempfängers KE gegeben wird, weist eingangsseitig eine Leitungsverzweigung auf. Ein erster Leitungszweig führt an den Stellrichtungseingang (U/D) eines Aufwärts/Abwärtszählers Z1, dessen Zähleingang C1 mit einem Umschalter UT verbunden ist. Ein zweiter Leitungszweig enthält ein Verzögerungsglied mit einer Laufzeit $\tau$ von 1 Bit, dessen Ausgangssignal einerseits den einen Umschaltkontakt UT2 des Umschalters steuert und andererseits an den einen Eingang eines Verknüpfungselementes V geführt ist, an dessen zweiten Eingang der Ausgang des Zählers Z1 angeschlossen ist. Ein dritter Leitungszweig steuert den zweiten Umschaltkontakt UT1 des Umschalters. Über die Umschaltkontakte UT1 und UT2, die vom Korrelationssignal bzw. vom verzögerten Korrelationssignal gesteuert werden, wird ein starrer Versorgungstakt $yT_{bit}$, der der Stellschrittgröße des Empfangstaktes entspricht, einerseits bzw. ein hoher Takt $2 y \cdot T_{bit}$ andererseits auf den Zähleingang C1 des Zählers Z1 gegeben.

Ferner ist ein Aufwärtszähler Z2 vorgesehen, der mit dem starren Takt $yT_{bit}$ im modulo-y-Betrieb arbeitet. Diesem Aufwärtszähler Z2 ist ein Speicher Sp nachgeschaltet, der zugleich mit dem Ausgang des Verknüpfungselementes V verbunden ist und dessen Ausgang PAR (Phasenadresse) zur Weiterverarbeitung im Rechner zum Rechner geführt ist.

Im Schaltungsteil zur Phasenfindung sind in Kreisen befindliche kleine Buchstaben eingezeichnet, die mit den entsprechenden Buchstaben des Zeitdiagrammes nach Fig. 3 übereinstimmen und bestimmte Signalverläufe und Zähltakte bzw. Zählerstände wiedergeben. Bei der Beschreibung der Funktion dieser Schaltung wird daher jeweils auf die entsprechenden Buchstaben im Zeitdiagramm Bezug genommen. Dabei wird von der Annahme ausgegangen daß $y = 8$ ist.

Das Korrelationssignal a steuert einmal die Zählrichtung des Aufwärts/Abwärtszählers Z1, zum anderen schaltet ist es den langsamen Takt $yT_{bit}$ (b) über den Umschalter ist es den langsamen Takt $yT_{bit}$ (b) über den Umschalter UT an den Takteingang C1 Zähleingang des Zählers Z1. Aus der definierten Ausgangsstellung heraus stellt sich der Zählerstand des Zählers Z1 entsprechend seiner Zählrichtung ein. Mit der negativen Zeichenwechselflanke des Korrelationssignals KS verändert sich die Zählrichtung. Gleichzeitig bleibt der Zähler Z1 so lange stehen, bis über das Verzögerungsglied $\tau$ das verzögerte Korrelationssignal (d) über den Schalter UT den hohen Takt $2 \, yT_{bit}$ auf den Takteingang (Zähleingang) des Zählers Z1 durchgeschaltet wird. Entsprechend verändert sich nun der Zählerstand (c) des Zählers Z1 mit umgekehrtem Vorzeichen und doppelter Geschwindigkeit. Die Zählerausgangsstellung wird exakt in der Mitte des verzögerten Korrelationssignals erreicht und mit diesem verknüpft. Das decodierte Ausgangssignal (Synchronisationssignal) (f) definiert erstens eine bestimmte Blockstelle (Blocksynchronisation) und zweitens mit seiner positiven Zeichenwechselflanke die optimale Empfangstaktphase (Bitsynchronisation). Über die Blocksynchronisation werden die Sende- und Empfangsteiler in der Sende/Empfangsstelle in die Bittaktebene gesetzt. Da die Stellinformation der Empfangstakphase in einem Rechner weiterverarbeitet wird, wird diese als Relativadresse PAR übertragen. Dazu dient der Aufwärtszähler Z2, der mit dem starren Takt $yT_{bit}$ im modulo-y-Betrieb arbeitet. Mit der Übernahmeflanke des Synchronisationssignales SS wird der momentane Zählerstand des Zählers Z1 in den Zwischenspeicher Sp übertragen. Diese Information bleibt bis zur Auswertung des folgenden Synchronisationszeichens erhalten und wird bei Bedarf vom Rechner ausgegeben.

Ist der Zeitbezug der Zähleranordnung Z2 in ortsfesten Einrichtungen (Funkkonzentratoren) eines synchronen Datennetzes netzweit definiert, so läßt sich aus der Zählerstandsdifferenz zwischen dem eigenen Bezugswert und dem Zeitpunkt des von einem Mobilteilnehmer empfangenen Synchronisationssignales SS entsprechenden Momentanzählerstand direkt über den bekannten Takt $yT_{bit}$ die Entfernung des Mobilteilnehmer zur Feststation ermitteln. Dabei wird vorausgesetzt, daß in der Mobilteilnehmerstation zwischen der von der Feststation empfangenen Signalisierung und der zur Feststation abzusetzenden eigenen Sendesignalisierung ein festeingestellter bekannter Phasenbezug besteht.

Fig. 4 zeigt den Empfangsteil für das Basisband der Sende/Empfangsstelle. Dabei wird das ankommende Nutzsignal zum einen dem Korrelationsempfänger KE und zum anderen einem gesteuerten Regenerator RE zugeführt, in dem es mit dem Takt einer internen Taktschleife regeneriert wird.

Der Korrelationsempfänger KE weist einen Signalausgang für die Empfangstakteinstellung (Bitsynchronisation) und einen Signalausgang für die Blocksynchronisation auf, die beide mit einem Steuerteil (Rechner) R, beispielsweise einem Mikroprozessor, verbunden sind. Der Signalausgang für die Bitsynchronisation ist ferner über einen vom Rechner gesteuerten Schalter US3 mit einem Empfangstaktphasenschieber P für eine direkte Empfangstaktphaseneinstellung verbunden, der an den Regenerator angeschlossen ist. Der Signalausgang für die Blocksynchronisation ist über einen vom Rechner R gesteuerten Schalter US2 direkt an die Regeneriereinheit angeschaltet. Aus dem Rechner R wird auch eine Nachführgröße für den Normalfrequenzgenerator G gewonnen, der mit dem Korrelationsempfänger KE und dem Empfangstaktphasenschieber P verbunden ist.

Bei Erkennen des Korrelationssignales werden die exakten Werte für die Bit- und Blocksynchronisation am Empfangstaktphasenschieber P für den Bittakt und an einem in Regenerator angeordneten Empfangsteiler T für den Blocktakt über die Schalter US3 bzw. US2 direkt eingestellt. Damit ist die Sende/Empfangseinrichtung auf das Datennetz synchronisiert. Im synchronen Betrieb übernimmt der Korrelationsempfänger KE in Verbindung mit dem Rechner R die Synchronisationskontrolle der Sende/Empfangseinrichtung. Die Synchronisationskontrolle besteht dabei aus der Empfangstaktphasenregelung und der Kontrolle der Blocksynchronität. Die Empfangstaktphasenregelung erfolgt durch Mittelung der Ausgangssignale des Korrelationempfängers KE im Rechner R und der Nachstellung des Phasentaktschiebers P durch die Rechnerausgabe. Die Kontrolle der Blocksynchronisation erfolgt durch die Überwachung der Korrelationssignals in dem von einer Teilerkette vorgegeben Erwartungszeitraum (Syn-Tor).

Zusammenfassend werden nochmals die einzelnen Funktionen genannt, die die vorstehend beschriebene Schaltung in vorteilhafter Weise erfüllt :

Bei aperiodischer Betriebsart erfolgt zunächst eine Synchronisation des Sende/Empfangsgerätes auf das Netz. Aus dem asynchronen Betrieb heraus ist nämlich eine Festlegung des Erwartungszeitraumes für das Korrelationssignal nicht möglich. Alle im Korrelationsempfänger erkannten Zeichen werden im Rechner auf ihren Blockabstand untersucht. Dabei gibt ein Ählichkeitsvergleich der Abstände den ungefähren Blockbezug (Funklaufzeiteinfluß) und die parallel arbeitende Empfangsqualitätsermittlung die Aussage über den für den Verbindungsaufbau am besten geeigneten Funkbereich an. Die Freigabe zur Synchronisation erfolgt stets im Zeitschlitz des jeweils ausgewählten Funkbereichs, bis ein erkanntes Korrelationssignal wirksam wird. Für diesen gezielten Zugriff liefert der Korrelationsempfänger folgende Kriterien : Direkte Einstellung des Empfangstaktes für die anschließende Datenauswertung und Setzen der Systemtakte, d. h. Bezug für die Datencodierung. Im synchronisierten Zustand liefert der Korrelationsempfänger für die Rechnerweiterverarbeitung indirekt die Empfangstakteinstelladresse, die im Rechner gemittelt wird, und die Frequenzkorrektur für den Normalfrequenzgenerator über eine Mittelung der Empfangstaktstellinformation.

Mit der erfindungsgemäßen Schaltung ist also in vorteilhafter Weise eine aperiodische Betriebsart möglich, wobei der direkte und indirekte Zugriff, d. h. über den Rechner, auf die Stellglieder für die Blocksynchronisation und Bitsynchronisation möglich ist. Die Nachführgeschwindigkeit der Stellgrößenempfangstaktphase und Normalfrequenz ist über den Rechner individuell einstellbar, wobei die Grenze durch die Geschwindigkeit der Meßwerterfassung gegeben ist. Die Empfangstaktphase wird in der von der Stromflußwinkeländerung weitgehend unabhängigen digitalen Phasenfindungseinrichtung ermittelt und kann bereits zum Lesen des nächsten dem Barkercodewort folgenden Zeichens benutzt werden. Über den Ähnlichkeitsvergleich der ausgewerteten Korrelationssignale kann eine Mobilstation den Blockbezug bis auf die Genauigkeit der Funklaufzeitdifferenzschwankung, welche durch die unterschiedliche Entfernung zu den einzelnen Stationen gegeben ist, erkennen.

## Anspruch

Schaltung zur Synchronisation einer Sende/Empfangsstelle auf das Datennetz eines digitalen Nachrichtensystems mit einem Korrelationsempfänger in der jeweiligen Empfangseinrichtung, dadurch gekennzeichnet, daß dem Korrelationsempfänger (KE) eine Einrichtung zur Phasenfindung nachgeschaltet ist mit einem Auf-/Abwärtszähler (Z1) mit definiertem Anfangszählerstand un definierter Stellrichtung, bei dem das Korrelationssignal (KS) entsprechend seiner Zeichenwechselflanke die Zählrichtung steuert und den Takt über einen Umschalter (UT) auf seinen Takteingang (Zähleingang) schaltet, derart, daß die eine Zählrichtung mit einem langsamen Takt $(y \cdot T_{bit})$ geschaltet wird und der Zählerstand des Auf/Abwärtszählers (Z1) bei Zählrichtungswechsel jeweils so lange festgehalten wird, bis das über ein Verzögerungsglied ($\tau$) verzögerte, den Zählrichtungswechsel bewirkende Korrelationssignal über den Umschalter (UT) einen Takt doppelter Taktfolge $(2 \ y \cdot T_{bit})$

auf den Takteingang des Auf/Abwärtszählers (Z1) schaltet, dessen Ausgangssignal (decodierter Anfangszählerstand) und das verzögerte Korrelationssignal den Eingängen einer Verknüpfungsschaltung (V) zugeführt werden, und daß ein weiterer, mit dem starren langsamen Takt $(y \cdot T_{bit})$ arbeitender Aufwärtszähler (Z2) vorgesehen ist, dessen Zählerstand in einen nachgeschalteten, an den Rechner angeschlossenen Zwischenspeicher (SP) bei Erreichen des decodierten Ausgangszählerstandes des Auf/Abwärtszählers (Z1) übernommen wird.

## Claim

Circuit for synchronising a transmitting/receiving station with the data network of a digital communications system, by means of a correlation receiver in the respective receiving device, characterised in that the correlation receiver (KE) is followed by a device for phase location with an upwards/downwards counter (Z1) having a defined initial count and a defined setting direction, wherein the correlation signal (KS) controls the counting direction in accordance with its character change flank and switches the clock pulse via a change-over switch (UT) on to its clock pulse input (counting input) in such a manner that the one counting direction is switched by means of a slow clock pulse $(y \cdot T_{bit})$ and the count of the upwards/downwards counter (Z1) is retained during the change in the counting direction until the correlation signal, which is delayed via a delay line ($\tau$) and effects the change in the counting direction, switches a clock pulse of twice the clock pulse sequence $(2 \ y \cdot T_{bit})$ on to the clock pulse input of the upwards/downwards counter (Z1), whose output signal (decoded initial count) and the delayed correlation signal are fed to the inputs of a logic circuit (V), and that there is provided a further upwards counter (Z2) which operates with the fixed slow clock pulse $(y \cdot T_{bit})$ and whose count is transferred into a following intermediate store (SP), which is connected to the computer, when the decoded initial count of the upwards/downwards counter (Z1) has been reached.

## Revendication

Circuit pour synchroniser un poste émetteur-récepteur sur le réseau de données d'un système numérique d'information comportant un récepteur de corrélation dans le dispositif de réception correspondant, caractérisé par le fait qu'en aval du récepteur de corrélation (KE) est branché un dispositif pour la recherche de la phase avec un compteur bidirectionnel (Z1) à état de comptage initial déterminé et à sens de réglage déterminé, dans lequel le signal de corrélation (KS) commande, en fonction de son flanc de changement de signe, le sens de comptage et applique la cadence, par l'intermédiaire d'un commutateur- inverseur (UT), à son entrée de cadence (entrée de comptage), de telle manière que l'un des sens de comptage est enclenché avec une cadence lente ($y \cdot T_{bit}$) et que l'état de comptage du compteur bidirectionnel (Z1) est, lors d'un changement du sens de comptage, arrêté jusqu'à ce que le signal de corrélation provoquant le changement du sens de comptage et retardé par un dispositif de temporisation ($\tau$), applique, par l'intermédiaire du commutateur (UT), une cadence à double fréquence de récurrence des cadences (2 $y \cdot T_{bit}$), à l'entrée de cadence du compteur bidirectionnel (Z1) dont le signal de sortie (état de comptage initial décodé) de même que le signal de corrélation sont appliqués aux entrées d'un circuit combinatoire (V), et qu'il est prévu un second compteur (Z2) opérant dans le sens croissant et dont l'état de comptage est pris en charge par une mémoire intermédiaire aval (SP) reliée au calculateur, lorsque l'état de comptage initial décodé du compteur bidirectionnel est atteint.

# FIG 1

# FIG 2

## FIG 3

a) Korrelationssignal Stellrichtung $Z_1$

b) Zähltakt $y \cdot T_{Bit}$

c) Zählerstand $Z_1$

d) Korr. Signal verzög. 1 Bit

e) Zähltakt $2y \cdot T_{Bit}$

f) Übertragssignalisierg. Carryout $Z_1$

g) Zählerstand $Z_2$

h) Speicherinformation an Rechner

## FIG 4